# EUROPÄISCHE PATENTSCHRIFT

(11) **EP 3 570 084 B1**
(45) Veröffentlichungstag und Bekanntmachung des Hinweises auf die Patenterteilung: **08.07.2020**
(21) Anmeldenummer: 18172688.6
(22) Anmeldetag: 16.05.2018
(51) Int. Cl.: G02B 6/36

(54) **VORRICHTUNG ZUM ÜBERTRAGEN VON OPTISCHEN SIGNALEN ZWISCHEN ZWEI DREHBAREN BAUEINHEITEN**
DEVICE FOR TRANSMITTING OPTICAL SIGNALS BETWEEN TWO ROTATABLE MODULES
DISPOSITIF DE TRANSMISSION DE SIGNAUX OPTIQUES ENTRE DEUX UNITÉS STRUCTURALES ROTATIVES

(43) Veröffentlichungstag der Anmeldung: 20.11.2019
(73) Patentinhaber: LTN Servotechnik GmbH, 83624 Otterfing (DE)
(72) Erfinder: AUTENZELLER, Peter, 83620 Feldkirchen-Westerham (DE); STEINIGANS, Andreas, 83043 Bad Aibling (DE)
(74) Vertreter: Hofmann, Ernst

(56) Entgegenhaltungen:
- EP-A1- 0 107 035
- EP-A1- 1 857 847
- US-A- 4 848 867
- US-A- 4 872 737

## Beschreibung

### GEBIET DER TECHNIK

Die Erfindung betrifft eine Vorrichtung zum Übertragen von optischen Signalen zwischen zwei relativ zueinander drehbaren Baueinheiten, gemäß dem Anspruch 1.

Entsprechende Baueinheiten werden häufig auch als Rotor und Stator bezeichnet. In diesen Baueinheiten werden optische Signale über eine Luftstrecke berührungslos geführt. Derartige Vorrichtungen werden in vielen technischen Gebieten eingesetzt um Signale von einer ortsfesten auf eine sich drehende Einheit zu übertragen. Um hohe Datenübertragungsraten zu erreichen ist es erforderlich, beispielsweise Videosignale in 4K-Qualität, dass die Baueinheiten in jeder Drehstellung exakt zueinander positioniert sind.

### STAND DER TECHNIK

In der Offenlegungsschrift EP 1 857 847 A1 ist ein optischer Drehübertrager offenbart, bei dem mittels zweier Detektoren zu dessen Justage die Abweichung des Lichtstrahls von der Drehachse ermittelt wird. Basierend auf der ermittelten Abweichung wird die Verkippung des Lichtstrahls errechnet und entsprechend kompensiert.

Aus der Offenlegungsschrift WO 2012/136645 A1 ist ein optischer Drehübertrager bekannt, bei dem die die Lage und Orientierung der optischen Achse bestimmenden Flächen des Rotors derart bearbeitet sind, dass eine erste Achse gegenüber der Lagerachse fehlausgerichtet ist, während die optische Achse mit der Lagerachse übereinstimmt. Dadurch soll eine Justage unnötig werden und dennoch Fehlertoleranzen für die Ausrichtung der optischen Achse relativ zu der Drehachse des Rotors verkleinert werden.

Dagegen wird in der Offenlegungsschrift EP 0 107 035 A1 ein optischer Drehübertrager beschrieben, welcher radial gerichtete Stellschrauben aufweist um eine entsprechende axiale Ausrichtung der Bauteile zu erreichen.

Aus der US Patentschrift 4 848 867 ist ein optischer Drehübertrager bekannt, welcher zwei konische Ringe aufweist, die zusammen mit jeweils einer faseroptischen Anordnung zentriert werden und im Anschluss jeweils mit einer ebenen Fläche eines Gehäuseteiles unlösbar verbunden, insbesondere verschweißt, werden.

Schließlich ist gemäß der US Patentschrift 4 872 737 ein optischer Drehübertrager mit einem Mehrfachanschluss bekannt, bei dem optische Zwischenfasern verwendet werden um Übertragungsverluste aufgrund von winkelmäßigen Fehlausrichtungen zu minimieren.

### ZUSAMMENFASSUNG DER ERFINDUNG

Der Erfindung liegt die Aufgabe zugrunde, eine Vorrichtung zum Übertragen von optischen Signalen zu schaffen, welche sehr hohe Übertragungsraten ermöglicht und dennoch vergleichsweise einfach herstellbar ist.

Diese Aufgabe wird erfindungsgemäß durch die Merkmale des Anspruchs 1 gelöst.

Entsprechend dient die Vorrichtung zum Übertragen von optischen Signalen zwischen eine ersten und einer zweiten Baueinheit. Dabei umfasst die erste Baueinheit eine erste Linse, einen ersten Lagerring und eine erste Spannhülse, die ihrerseits eine konische Fläche aufweist. Die zweite Baueinheit umfasst eine zweite Linse, einen zweiten Lagerring, einen zweiten Körper, eine zweite Spannhülse, die eine konische Fläche aufweist und ein Klemmelement. Der erste Lagerring und der zweite Lagerring sind einem Lager zugeordnet, durch welches die erste Baueinheit und die zweite Baueinheit drehbar um eine Achse miteinander verbunden sind. Dabei ist die erste Linse mit Hilfe der ersten Spannhülse mittelbar oder unmittelbar am ersten Lagerring durch eine erste konische Verbindung zentrisch bezüglich der Achse festgelegt. Zudem ist die zweite Linse mit Hilfe der zweiten Spannhülse mittelbar oder unmittelbar am zweiten Körper durch eine zweite konische Verbindung zentrisch bezüglich der Achse festgelegt. Ferner ist der zweite Körper mit Hilfe eines Klemmelements mittelbar oder unmittelbar am zweiten Lagerring durch eine dritte konische Verbindung zentrisch bezüglich der Achse festgelegt.

Die konischen Verbindungen sind jeweils durch zwei konische Flächen, welche die Form eines geraden Kreiskegels oder geraden Kreiskegelstumpfes aufweisen, hergestellt. Dabei liegen innerhalb einer Verbindung zwei konische Flächen vor, wobei eine konische Fläche einer Verbindung als eine insbesondere konvexe, nach außen gewölbte Außenfläche (Konus) ausgebildet ist und die andere konische Fläche als eine insbesondere konkave, nach innen gewölbte Hohlraum-begrenzende Fläche. Die Symmetrieachse der ersten, zweiten und dritten konischen Verbindungen beziehungsweise der konischen Flächen oder Konen ist die Achse um die die erste Baueinheit relativ zur zweiten Baueinheit drehbar ist. Insbesondere weisen die erste Spannhülse und / oder die zweite Spannhülse jeweils eine nach außen gewölbte konische Fläche auf. Mit Vorteil weisen die erste Spannhülse und / oder die zweite Spannhülse Schlitzte auf, wobei insbesondere die konischen Flächen der ersten Spannhülse und / oder der zweiten Spannhülse durch Schlitze unterbrochen sind, so dass dort eine radiale Nachgiebigkeit beziehungsweise Beweglichkeit der betreffenden Spannhülse erreicht wird. Gleichermaßen kann der zweite Körper im Bereich der dritten konischen Verbindung Schlitze aufweisen beziehungsweise die konische Fläche des zweiten Körpers um so eine radiale Nachgiebigkeit beziehungsweise Beweglichkeit zu schaffen. Somit umfasst der Begriff konische Fläche auch eine Fläche, die (zum Beispiel durch Schlitze) unterbrochen ist.

Die erste Linse oder die zweite Linse oder beide Linsen sind mit Vorteil als Kollimationslinsen, insbesondere als Kugellinsen, ausgestaltet. Alternativ können auch Gradientenlinsen (GRIN-Linsen) verwendet werden.

In Weiterbildung der Erfindung weist die erste Baueinheit eine Hülse auf, die bezogen auf die Achse radial zwischen der ersten Spannhülse und dem ersten Lagerring angeordnet ist. Auf diese Weise ist die erste konische Verbindung durch die erste Spannhülse und die Hülse hergestellt, wobei sich die erste konische Fläche der ersten Spannhülse und eine konische Fläche der Hülse berühren. Die Hülse kann eine nach innen gewölbte konische Fläche aufweisen und drückt dann radial auf den ersten Lagerring.

In vorteilhafter Ausgestaltung der Erfindung kann der zweite Körper unmittelbar eine erste konische Fläche aufweisen, wobei die zweite konische Verbindung mit Hilfe dieser ersten konischen Fläche der zweiten Spannhülse hergestellt ist. Dabei kann die erste konische Fläche des zweiten Körpers nach innen gewölbt sein.

Mit Vorteil weisen der zweite Körper eine zweite konische Fläche und das Klemmelement eine konische Fläche auf, so dass die dritte konische Verbindung mit Hilfe der zweiten konischen Fläche des zweiten Körpers und der konischen Fläche des Klemmelements hergestellt ist. Dabei können die zweite konische Fläche des zweiten Körpers nach außen und die konische Fläche des Klemmelements nach innen gewölbt sein.

Insbesondere kann die erste konische Fläche des zweiten Körpers nach innen (konkav) gewölbt sein und die zweite konische Fläche des zweiten Körpers nach außen (konvex) gewölbt.

In weiterer Ausgestaltung der Erfindung weist der zweite Körper ein Gewinde, etwa ein Außengewinde, auf und das Klemmelement weist ebenfalls ein Gewinde, zum Beispiel ein Innengewinde, auf. Das Gewinde des zweiten Körpers ist in Eingriff mit dem Gewinde des Klemmelements, wobei durch Drehung des Klemmelements relativ zum zweiten Körper die dritte konische Verbindung hergestellt ist beziehungsweise verspannt wird.

Mit Vorteil umfasst die erste Baueinheit einen ersten Körper, der ein Gewinde, etwa ein Innengewinde, aufweist. Zudem weist die erste Spannhülse ein Gewinde, zum Beispiel ein Außengewinde, auf. Das Gewinde der ersten Spannhülse ist in Eingriff mit dem Gewinde des ersten Körpers, wobei durch Drehung des ersten Körper relativ zur ersten Spannhülse die erste konische Verbindung hergestellt ist beziehungsweise verspannt wird.

In weiterer Ausgestaltung der Erfindung umfasst die zweite Baueinheit ein Befestigungselement, das ein Gewinde, etwa ein Innengewinde, aufweist. Zudem weist die zweite Spannhülse ein Gewinde, zum Beispiel ein Außengewinde auf. Das Gewinde des Befestigungselements ist in Eingriff mit dem Gewinde der zweiten Spannhülse, wobei durch Drehung des Befestigungselements relativ zur zweiten Spannhülse die zweite konische Verbindung hergestellt ist beziehungsweise verspannt wird.

In vorteilhafter Ausgestaltung der Erfindung kann der erste Lagerring oder der zweite Lagerring oder beide je eine konische Fläche aufweisen.

Mit Vorteil weisen der zweite Lagerring eine zweite konische Fläche, insbesondere eine nach innen gewölbte konische Fläche, und das Klemmelement eine konische Fläche, insbesondere eine nach außen gewölbte konische Fläche, auf. Dabei kann die dritte konische Verbindung mit Hilfe der zweiten konischen Fläche des zweiten Lagerrings und der konischen Fläche des Klemmelements hergestellt sein.

In vorteilhafter Ausgestaltung der Erfindung kann das Klemmelement als ein Ring ausgestaltet sein mit zwei innen liegenden konischen Flächen.

Mit Vorteil weist der erste Lagerring zumindest eine konische Fläche (vorzugsweise zwei konische Flächen) auf, insbesondere zumindest eine nach innen gewölbte konische Fläche. In dieser Anordnung ist die erste konische Verbindung durch die erste Spannhülse und die konische Fläche des ersten Lagerrings hergestellt, wobei sich die konische Fläche der ersten Spannhülse und eine konische Fläche des ersten Lagerrings berühren.

In vorteilhafter Ausgestaltung der Erfindung kann das Lager als ein Wälzlager ausgestaltet sein. Insbesondere kann das Lager als zwei Wälzlager ausgestaltet sein. Mit Vorteil sind dann die zwei Wälzlager durch die erste konische Verbindung und durch die dritte konische Verbindung im Sinne einer Stützlagerung in O-Anordnung vorgespannt und angestellt.

Mit Vorteil ist die Vorrichtung derart ausgestaltet, dass die erste konische Verbindung unter axialer Zugbelastung der ersten Spannhülse hergestellt ist. Alternativ oder ergänzend ist die zweite konische Verbindung unter axialer Zugbelastung der zweiten Spannhülse hergestellt.

In weiterer Ausgestaltung der Erfindung umfasst die erste Baueinheit einen ersten Lichtleiter und die zweite Baueinheit einen zweiten Lichtleiter. Die Vorrichtung ist so konfiguriert, dass der Strahlengang des durch die Lichtleiter geführten Lichtes mit axialer Richtungskomponente propagiert.

Durch die erfindungsgemäße Vorrichtung ist es nun möglich Signale mit einer hervorragenden Qualität zu übertragen, so dass extrem hohe Datenraten, insbesondere bei minimaler Dämpfung, erreichbar sind.

Vorteilhafte Ausbildungen der Erfindung entnimmt man den abhängigen Ansprüchen.

Weitere Einzelheiten und Vorteile der erfindungsgemäßen Vorrichtung ergeben sich aus der nachfolgenden Beschreibung zweier Ausführungsbeispiele anhand der beiliegenden Figuren.

### KURZE BESCHREIBUNG DER ZEICHNUNGEN

Es zeigen die
- Figur 1: eine Längsschnittdarstellung einer Vorrichtung zum Übertragen von optischen Signalen gemäß einem ersten Ausführungsbeispiel,
- Figur 2: eine perspektivische Ansicht einer ersten Baueinheit der Vorrichtung mit Wälzlagern gemäß dem ersten Ausführungsbeispiel,
- Figur 3: eine perspektivische Ansicht einer zweiten Baueinheit der Vorrichtung gemäß dem ersten Ausführungsbeispiel,
- Figur 4: eine Längsschnittdarstellung einer Vorrichtung zum Übertragen von optischen Signalen gemäß einem zweiten Ausführungsbeispiel.

### BESCHREIBUNG DER AUSFÜHRUNGSFORMEN

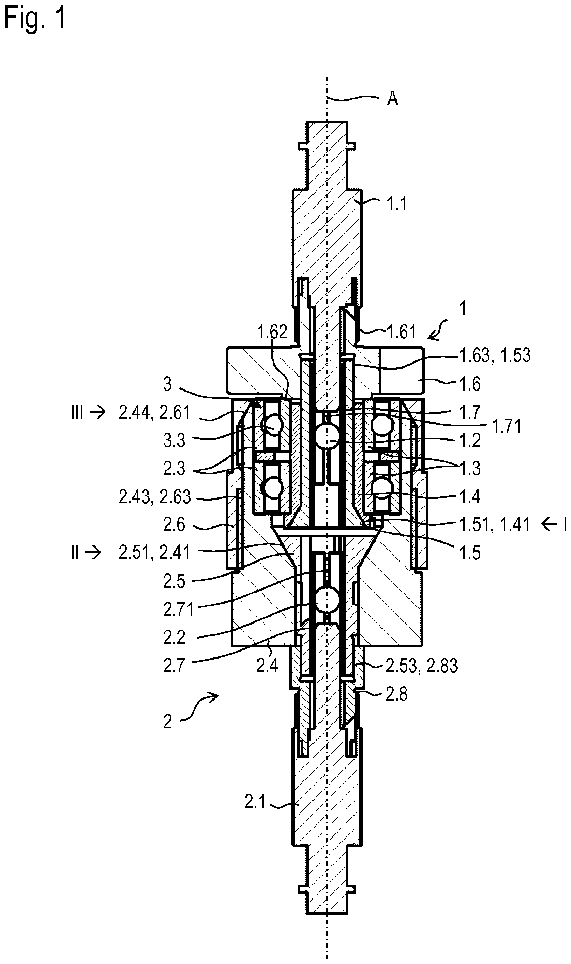

Gemäß der Figur 1 umfasst die erfindungsgemäße Vorrichtung eine erste Baueinheit 1, die als Rotor bezeichnet werden kann und eine zweite Baueinheit 2, die beispielsweise als Stator arbeitet. Die Vorrichtung dient zum Übertragen von optischen Signalen mit hoher Übertragungsrate zwischen der ersten Baueinheit 1 und der zweiten Baueinheit 2, wobei die erste Baueinheit 1 und die zweite Baueinheit 2 relativ zueinander um eine Achse A drehbar angeordnet sind. Die zweite Baueinheit 2 ist gegenüber der ersten Baueinheit 1 mit Hilfe eines Lagers 3 gelagert. Das Lager 3 ist als zwei Wälzlager ausgestaltet, welche jeweils einen ersten Lagerring 1.3 (Innenring), einen zweiten Lagerring 2.3 (Außenring) sowie Wälzkörper 3.3, beispielsweise Kugeln, umfassen.

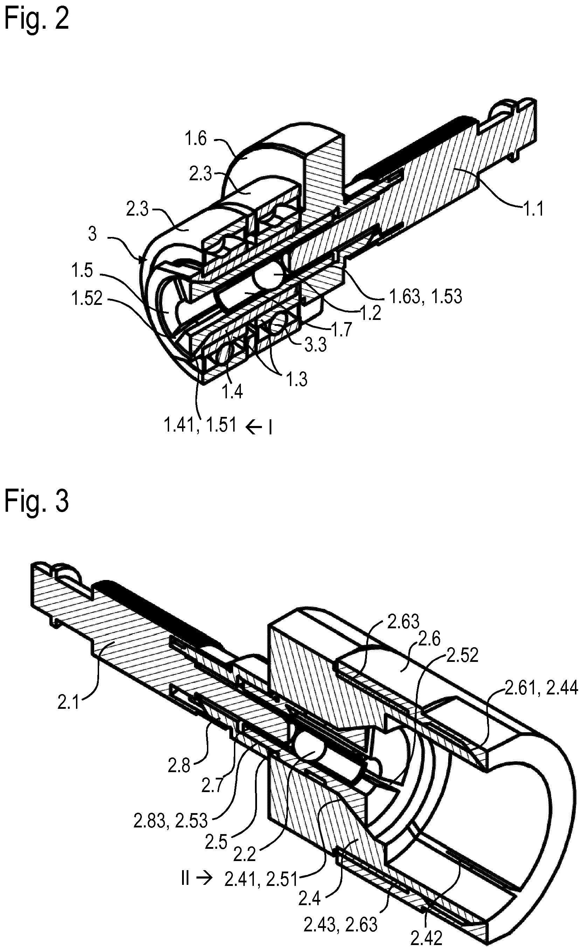

Im Zuge der Montage der ersten Baueinheit 1 wird zunächst eine erste Spannhülse 1.5 bereitgestellt. Die erste Spannhülse 1.5 weist eine konische Fläche 1.51, ein Gewinde 1.53 sowie drei Schlitze 1.52 (Figur 2) auf. Die Schlitze 1.52 befinden sich an demjenigen Ende der ersten Spannhülse 1.5, das dem Gewinde 1.53 axial gegenüber liegt, insbesondere verlaufen die Schlitze 1.52 durch die konische Fläche 1.51 hindurch. Die konische Fläche 1.51 der ersten Spannhülse 1.5 ist konvex, also nach außen gewölbt. Mit anderen Worten umfasst die erste Spannhülse 1.5 einen Konus.

Radial außerhalb bezüglich der ersten Spannhülse 1.5 wird eine Hülse 1.4 montiert, die ebenfalls eine konische Fläche 1.41 aufweist, wobei die konische Fläche 1.41 konkav, also nach innen gewölbt ist. Auf die Hülse 1.4 werden die zwei ersten Lagerringe 1.3 des Lagers 3 aufgeschoben beziehungsweise aufgepresst, so dass die Schlitze 1.52 parallel zur Achse A verlaufen.

Danach wird ein erster Körper 1.6, welcher ein Außengewinde 1.61, eine bearbeitete Kontaktfläche 1.62 und ein weiteres Gewinde 1.63 (hier ein Innengewinde) aufweist, bereitgestellt. Der (nicht-konische) Endabschnitt, also das Gewinde 1.53, der ersten Spannhülse 1.5 wird in das weitere Gewinde 1.63 des ersten Körpers 1.6 eingedreht.

Außerdem werden ein erster Lichtleiter 1.1 und eine so genannte erste Führungshülse 1.7 sowie eine erste Linse 1.2 bereitgestellt. Die erste Linse 1.2 dient zur Kollimation und ist im vorgestellten Ausführungsbeispiel als ein transparenter Kugelkörper, insbesondere als eine Quarzglaskugel, ausgestaltet. Die Führungshülse 1.7 ist hier aus einem Keramikwerkstoff hergestellt und weist einen in Richtung der Achse A verlaufenden Schlitz 1.71 auf.

In einem weiteren Montageschritt wird die erste Linse 1.2 in die erste Führungshülse 1.7 eingeführt. Danach wird die erste Führungshülse 1.7 mit der ersten Linse 1.2 auf das Ende des ersten Lichtleiters 1.1 aufgeschoben. Die Führungshülse 1.7 samt erster Linse 1.2 und erstem Lichtleiter 1.1 wird danach durch die Bohrung des ersten Körpers 1.6 hindurch in die erste Spannhülse 1.5 gesteckt. Eine in den Figuren nicht näher dargestellte Überwurfmutter wird mit dem Gewinde 1.61 verschraubt, so dass der erste Lichtleiter 1.1 axial am ersten Körper 1.6 fixiert ist, wobei zudem durch eine formschlüssige Kodierung ein Verdrehschutz des ersten Lichtleiters 1.1 relativ zum ersten Körper 1.6 hergestellt wird.

Durch Eindrehen des Gewindes 1.53 der ersten Spannhülse 1.5 in das weitere Gewinde 1.63 des ersten Körpers 1.6 wird eine sichere und passgenaue Klemmung der ersten Führungshülse 1.7 samt erster Linse 1.2 in der ersten Baueinheit 1 erreicht. Dabei stützt sich die Kontaktfläche 1.62 am ersten Lagerring 1.3 ab, so dass bei weiterem Eindrehen die erste Spannhülse 1.5 axial in die konische Fläche 1.41 der Hülse 1.4 gezogen wird, was eine radiale Klemmung der ersten Führungshülse 1.7 samt erster Linse 1.2 bewirkt. Die erste Linse 1.2 ist somit mit Hilfe der ersten Spannhülse 1.5 am ersten Lagerring 1.3 durch eine erste konische Verbindung I unter Kontakt der konischen Fläche 1.51 der ersten Spannhülse 1.51 und der konischen Fläche 1.41 der Hülse 1.4, die radial zwischen der ersten Spannhülse 1.5 und dem ersten Lagerring 1.3 angeordnet ist, zentrisch bezüglich der Achse A festgelegt. Dabei wird die erste Linse 1.2 von der ersten Spannhülse 1.5 über die erste Führungshülse 1.7 geklemmt. Folglich ist auch das Ende des ersten Lichtleiters 1.1 bezüglich der Achse A zentriert angeordnet. In dieser Anordnung ist die erste konische Verbindung I unter axialer Zugbelastung der ersten Spannhülse 1.5 hergestellt.

Die zweite Baueinheit 2, die hier als Stator fungiert, umfasst unter anderem eine zweite Spannhülse 2.5, welche ebenfalls eine konische Fläche 2.51 und Schlitze 2.52 (Figur 3) aufweist. Die konische Fläche 2.51 der zweiten Spannhülse 2.5 ist konvex, also nach außen gewölbt. Mit anderen Worten umfasst die zweite Spannhülse 2.5 einen Konus. Durch die Schlitze 2.52 wird im Bereich des Konus beziehungsweise der konischen Fläche 2.51 eine radiale Nachgiebigkeit der Spannhülse 2.5 erreicht. Außerdem ist in die zweite Spannhülse 2.5 an einem Ende ein Gewinde 2.53 eingearbeitet. Die zweite Spannhülse 2.5 wird im Zuge der Montage der zweiten Baueinheit 2 in eine Bohrung eines zweiten Körpers 2.4 eingeführt, wobei die Bohrung im zweiten Körper 2.4 eine erste konische Fläche 2.41 aufweist. Diese erste konische Fläche 2.41 ist konkav, also nach innen gewölbt.

Zusätzlich werden ein zweiter Lichtleiter 2.1 und eine so genannte zweite Führungshülse 2.7 sowie eine zweite Linse 2.2 bereitgestellt. Die zweite Linse 2.2 dient zur Kollimation und ist auch hier als ein transparenter Kugelkörper, insbesondere als eine Quarzglaskugel, ausgestaltet. Die Führungshülse 2.7 ist auch hier aus einem Keramikwerkstoff hergestellt und weist einen in Richtung der Achse A verlaufenden Schlitz 2.71 auf.

In einem weiteren Montageschritt wird die zweite Linse 2.2 in die zweite Führungshülse 2.7 eingeführt. Danach wird die zweite Führungshülse 2.7 mit der zweiten Linse 2.2 auf das Ende des zweiten Lichtleiters 2.1 aufgeschoben.

Weiterhin wird ein Befestigungselement 2.8 mit einem Gewinde 2.83 - hier ein Innengewinde - bereitgestellt. Die Führungshülse 2.7 samt zweiter Linse 2.2 und dem zweitem Lichtleiter 2.1 wird danach durch eine zentrale Bohrung des Befestigungselements 2.8 in die zweite Spannhülse 2.5 gesteckt. Das Gewinde 2.83 des Befestigungselements 2.8 wird in Eingriff mit dem Gewinde 2.53 der zweiten Spannhülse 2.5 gebracht, das axial aus dem zweiten Körper 2.4 heraus ragt. Das Befestigungselement 2.8 wird mit dem Gewinde 2.53 der zweiten Spannhülse 2.5 verschraubt, so dass sich das Befestigungselement 2.8 stirnseitig am zweiten Körper 2.4 abstützt und der zweite Lichtleiter 2.1 relativ zum zweiten Körper 2.4 fixiert ist, wobei zudem durch eine formschlüssige Kodierung ein Verdrehschutz des zweiten Lichtleiters 2.1 relativ zur zweiten Spannhülse 2.5 hergestellt wird.

In der Folge wird bei weiterem Eindrehen die zweite Spannhülse 2.5 in die erste konische Fläche 2.41 des zweiten Körpers 2.4 gezogen, was eine radiale Klemmung der zweiten Führungshülse 2.7 samt zweiter Linse 2.2 bewirkt. Nach abgeschlossener Montage der Vorrichtung, ist die erste konische Fläche 2.41 des zweiten Körpers 2.4 in Berührkontakt zur konischen Fläche 2.51 der zweiten Spannhülse 2.5, wodurch eine zweite konische Verbindung II hergestellt ist. Durch die zweite konische Verbindung II wird die zweite Linse 2.2 mit Hilfe der zweiten Spannhülse 2.5 am zweiten Körper 2.4 zentrisch bezüglich der Achse A festgelegt. Dabei wird die zweite Linse 2.2 von der zweiten Spannhülse 2.5 über die zweite Führungshülse 2.7 geklemmt. Die zweite konische Verbindung II ist demnach unter axialer Zugbelastung der zweiten Spannhülse 2.5 hergestellt.

Der zweite Körper 2.4 weist gemäß der Figur 3 zudem ein Gewinde 2.43 (hier ein Außengewinde) und eine zweite konische Fläche 2.44 auf, die nach außen gewölbt beziehungsweise konvex ist. Außerdem weist der zweite Körper 2.4 Schlitze 2.42 auf, die sich über eine Teillänge des zweiten Körpers 2.4 in axialer Richtung erstrecken und an einem Ende des zweiten Körpers 2.4 in axialer Richtung offen sind, so dass auch der zweite Körper 2.4 in diesem Bereich radial nachgiebig beziehungsweise radialelastisch ausgestaltet ist.

Auf den zweiten Körper 2.4 wird ein Klemmelement 2.6 geschoben. Dieses weist eine konkave nach innen gewölbte konische Fläche 2.61 sowie ein Gewinde 2.63 (hier ein Innengewinde) auf. Das Gewinde 2.63 des Klemmelements 2.6 wird mit dem Gewinde 2.43 des zweite Körpers 2.4 verschraubt, wobei durch die daraus resultierende axiale Verlagerung des Klemmelements 2.6 relativ zum zweiten Körpers 2.4 die zweite konische Fläche 2.44 des zweiten Körpers 2.4 in Berührkontakt mit der konischen Fläche 2.61 des Klemmelements 2.6 gelangt. Dies hat zur Folge, dass sich der zweite Körper 2.4 im Bereich der Schlitze 2.42 radial nach innen verformt. Das Klemmelement 2.6 gemäß dem Ausführungsbeispiel kann auch als eine Überwurfmutter bezeichnet werden.

Die erste Baueinheit 1 kann nun mit der zweiten Baueinheit 2 verbunden werden. In diesem Zusammenhang wird das Klemmelement 2.6 in eine Stellung gebracht, in welcher sich die zweite konische Fläche 2.44 des zweiten Körpers 2.4 und die konische Fläche 2.61 des Klemmelements 2.6 nicht berühren, so dass der zweite Körper 2.4 im Bereich seiner Schlitze 2.42 radial mechanisch spannungsfrei ist. In dieser Stellung wird nun die erste Baueinheit 1 in die zweite Baueinheit 2 eingeführt, wobei die zweiten Lagerringe 2.3 (die der zweiten Baueinheit 2 zuzuordnen sind) dem zweiten Körper 2.4 beziehungsweise dessen Schlitze 2.42 radial gegenüber liegen. Danach wird das Klemmelement 2.6 gedreht, wobei durch die in Eingriff befindlichen Gewinde 2.43, 2.63 die zweite konische Fläche 2.44 des zweiten Körpers 2.4 in Berührkontakt mit der konischen Fläche 2.61 des Klemmelements 2.6 gelangt wodurch eine dritte konische Verbindung III hergestellt ist. In der Folge wird dann der mit den Schlitzen 2.42 versehene zweite Körper 2.4 radial nach innen gegen die zweiten Lagerringe 2.3 gedrückt und somit geklemmt beziehungsweise verspannt. Demnach ist der zweite Körper 2.4 mit Hilfe des Klemmelements 2.6 am zweiten Lagerring 2.3 durch die dritte konische Verbindung III zentrisch bezüglich der Achse A festgelegt. Gleichzeitig sind die zwei Wälzlager durch die erste konische Verbindung I und die dritte konische Verbindung III im Sinne einer Stützlagerung in O-Anordnung vorgespannt und angestellt.

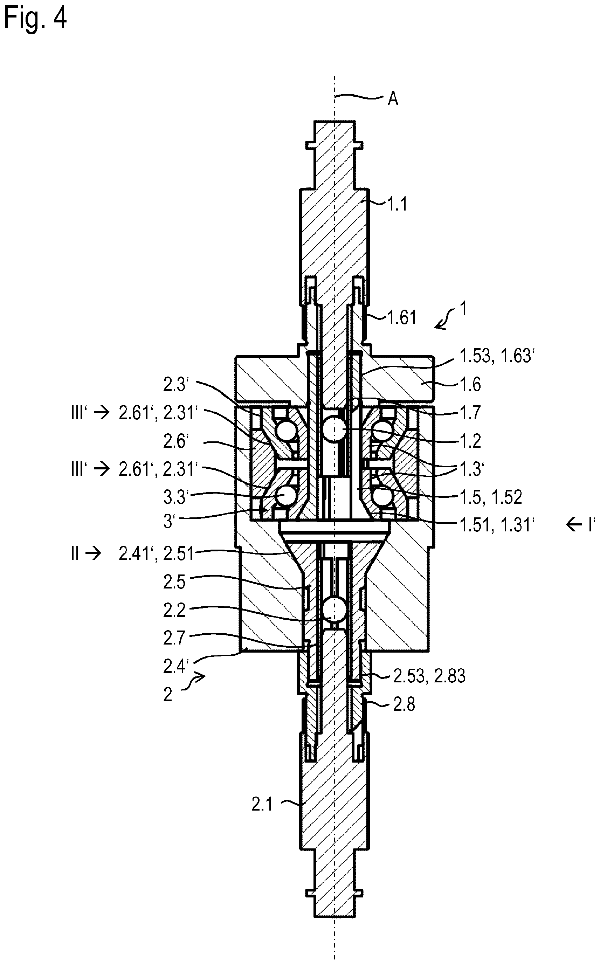

In der Figur 4 ist ein Längsschnitt durch eine Vorrichtung zum Übertragen von optischen Signalen gemäß einem zweiten Ausführungsbeispiel gezeigt. Die Vorrichtung gemäß dem zweiten Ausführungsbeispiel unterscheidet sich von derjenigen nach dem ersten Ausführungsbeispiel insbesondere dadurch, dass das Lager 3' zwei erste Lagerringe 1.3' umfasst, die jeweils eine erste konische Fläche 2.31' aufweisen sowie zwei zweite Lagerringe 2.3', die jeweils ein zweite konische Fläche 2.31' aufweisen.

Zudem ist das Klemmelement 2.6' gemäß dem zweiten Ausführungsbeispiel als ein Ring mit zwei innen liegenden konischen Flächen 2.61' ausgebildet. Das Klemmelement 2.6' gemäß dem zweiten Ausführungsbeispiel ist radial nachgiebig ausgestaltet, insbesondere weist der Ring hier einen Spalt auf, welcher eine radiale Verformung des Rings beziehungsweise des Klemmelements 2.6' erlaubt.

Der zweite Körper 2.4' ist im vorgestellten Ausführungsbeispiel so ausgestaltet, dass dieser nur eine erste konische Fläche 2.41' aufweist, die auch hier konkav, also nach innen gewölbt ist.

Die erste Linse 1.2 ist hier mit Hilfe der ersten Spannhülse 1.5 am ersten Lagerring 1.3 durch eine erste konische Verbindung I' unter Kontakt der konischen Fläche 1.51 der ersten Spannhülse 1.5 und der konischen Fläche 1.31' des ersten Lagerrings 1.3' zentrisch bezüglich der Achse A festgelegt. Dabei wird die erste Linse 1.2 von der ersten Spannhülse 1.5 über die erste Führungshülse 1.7 geklemmt.

Die zwei konischen Flächen 2.61' des Klemmelements 2.6' sind in Berührkontakt mit den konischen Flächen 2.31' der zweiten Lagerringe 2.3', wodurch eine dritte konische Verbindung III' hergestellt ist. In der Folge wird dann das Klemmelement 2.6' radial nach außen gegen den zweiten Körper 2.4' unter Abstützung gegen die zweiten Lagerringe 2.3' gedrückt. Somit wird letztlich durch die dritte konische Verbindung III' der zweite Körper 2.4' mit Hilfe eines Klemmelements 2.6' an den zweiten Lagerringen 2.3' zentrisch bezüglich der Achse A festgelegt.

Somit ist eine Vorrichtung geschaffen, die zum Übertragen von optischen Signalen zwischen zwei Baueinheiten 1, 2 geeignet ist, wobei der erste Lichtleiter 1.1, die erste Linse 1.2, der zweite Lichtleiter 2.1 und die zweite Linse 2.2 mit vergleichsweise geringem Montageaufwand mit hoher Präzision koaxial zueinander angeordnet sind. Zudem kann bei der Montage der Baueinheiten 1, 2 beziehungsweise der Vorrichtung auf einen Klebeprozess verzichtet werden.

## Patentansprüche

1. Vorrichtung zum Übertragen von optischen Signalen zwischen zwei relativ zueinander drehbaren Baueinheiten (1, 2), wobei
die erste Baueinheit (1)
- eine erste Linse (1.2),
- einen ersten Lagerring (1.3, 1.3') und
- eine erste Spannhülse (1.5), die eine konische Fläche (1.51) aufweist, umfasst, und
die zweite Baueinheit (2)
- eine zweite Linse (2.2),
- einen zweiten Lagerring (2.3, 2.3').
- einen zweiten Körper (2.4, 2.4'),
- eine zweite Spannhülse (2.5), die eine konische Fläche (2.51) aufweist und
- ein Klemmelement (2.6, 2.6') umfasst, wobei
der erste Lagerring (1.3, 1.3') und der zweite Lagerring (2.3, 2.3') einem Lager (3, 3') zugeordnet sind, durch welches die erste Baueinheit (1) und die zweite Baueinheit (2) drehbar um eine Achse (A) miteinander verbunden sind, und
jeweils
¬ die erste Linse (1.2) mit Hilfe der ersten Spannhülse (1.5) am ersten Lagerring (1.3, 1.3') durch eine erste konische Verbindung (I; I'),
¬ die zweite Linse (2.2) mit Hilfe der zweiten Spannhülse (2.5) am zweiten Körper (2.4, 2.4') durch eine zweite konische Verbindung (II) zentrisch bezüglich der Achse (A) festgelegt sind, **dadurch gekennzeichnet, dass** :
der zweite Körper (2.4, 2.4') mit Hilfe des Klemmelements (2.6, 2.6') am zweiten Lagerring (2.3, 2.3') durch eine dritte konische Verbindung (III, III') zentrisch bezüglich der Achse (A) festgelegt ist; und
die erste Baueinheit (1) eine Hülse (1.4) aufweist, die radial zwischen der ersten Spannhülse (1.5) und dem ersten Lagerring (1.3) angeordnet ist, so dass die erste konische Verbindung (I) durch die erste Spannhülse (1.5) und die Hülse (1.4) hergestellt ist oder
der erste Lagerring (1.3') eine konische Fläche (1.31') aufweist, wobei die erste konische Verbindung (I') durch die erste Spannhülse (1.5) und die konische Fläche (1.31') des ersten Lagerrings (1.3') hergestellt ist.

2. Vorrichtung gemäß einem der vorhergehenden Ansprüche, wobei der zweite Körper (2.4, 2.4') eine erste konische Fläche (2.41, 2.41') aufweist, wobei die zweite konische Verbindung (II) mit Hilfe der ersten konischen Fläche (2.41, 2.41') des zweiten Körpers (2.4, 2.4') und der konischen Fläche (2.51) der zweiten Spannhülse (2.5) hergestellt ist.

3. Vorrichtung gemäß einem der vorhergehenden Ansprüche, wobei der zweite Körper (2.4) eine zweite konische Fläche (2.44) und das Klemmelement (2.6) eine konische Fläche (2.61) aufweisen, so dass die dritte konische Verbindung (III) mit Hilfe der zweiten konischen Fläche (2.44) des zweiten Körpers (2.4) und der konischen Fläche (2.61) des Klemmelements (2.6) hergestellt ist.

4. Vorrichtung gemäß dem Anspruch 3, wobei der zweite Körper (2,4) ein Gewinde (2.43) aufweist und das Klemmelement (2.6) ebenfalls ein Gewinde (2.63) aufweist, das in das Gewinde (2.42) des zweiten Körpers (2.4) eingreift, wobei durch Drehung des Klemmelements (2.6) relativ zum zweiten Körper (2.4) die dritte konische Verbindung (III) hergestellt ist.

5. Vorrichtung gemäß einem der vorhergehenden Ansprüche, wobei die erste Baueinheit (1) einen ersten Körper (1.6) umfasst, der ein Gewinde (1.63) aufweist und zudem die erste Spannhülse (1.5) ein Gewinde (1.53) aufweist, das in das Gewinde (1.63) des ersten Körpers (1.6) eingreift, wobei durch Drehung des ersten Körper (1.6) relativ zur ersten Spannhülse (1.5) die erste konische Verbindung (I; I') hergestellt ist.

6. Vorrichtung gemäß einem der vorhergehenden Ansprüche, wobei die zweite Baueinheit (2) ein Befestigungselement (2.8) umfasst, das ein Gewinde (2.83) aufweist und zudem die zweite Spannhülse (2.5) ein Gewinde (2.53) aufweist, das in das Gewinde (2.83) des Befestigungselements (2.8) eingreift, wobei durch Drehung des Befestigungselements (2.8) relativ zur zweiten Spannhülse (2.5) die zweite konische Verbindung (II) hergestellt ist.

7. Vorrichtung gemäß dem Anspruch 1, wobei der zweite Lagerring (2.3;) eine zweite konische Fläche (2.31') und das Klemmelement (2.6') eine konische Fläche (2.61') aufweisen.

8. Vorrichtung gemäß einem der vorhergehenden Ansprüche, wobei das Klemmelement (2.6') als ein Ring ausgestaltet ist mit zwei innen liegenden konischen Flächen (2.61').

9. Vorrichtung gemäß einem der vorhergehenden Ansprüche, wobei das Lager (3, 3') als ein Wälzlager ausgestaltet ist.

10. Vorrichtung gemäß dem Anspruch 9, wobei das Lager (3, 3') als zwei Wälzlager ausgestaltet ist.

11. Vorrichtung gemäß dem Anspruch 10, wobei die zwei Wälzlager durch die erste konische Verbindung (I; I') und durch die dritte konische Verbindung (III; III') im Sinne einer Stützlagerung in O-Anordnung vorgespannt und angestellt sind.

12. Vorrichtung gemäß einem der vorhergehenden Ansprüche, wobei die Vorrichtung derart ausgestaltet ist, dass die erste konische Verbindung (I; I') unter axialer Zugbelastung der ersten Spannhülse (1.5) und / oder die zweite konische Verbindung (II) unter axialer Zugbelastung der zweiten Spannhülse (2.5) hergestellt ist.

13. Vorrichtung gemäß einem der vorhergehenden Ansprüche, wobei die erste Baueinheit (1) einen ersten Lichtleiter (1.1) und die zweite Baueinheit (2) einen zweiten Lichtleiter (2.1) umfasst

## Claims

1. Device for transmitting optical signals between two structural units (1, 2) that are rotatable relative to one another, wherein
the first structural unit (1) comprises
- a first lens (1.2),
- a first bearing ring (1.3, 1.3') and
- a first clamping sleeve (1.5), which has a conical surface (1.51),
and
the second structural unit (2) comprises
- a second lens (2.2),
- a second bearing ring (2.3, 2.3'),
- a second body (2.4, 2.4'),
- a second clamping sleeve (2.5), which has a conical surface (2.51), and
- a clamping element (2.6, 2.6'), wherein
the first bearing ring (1.3, 1.3') and the second bearing ring (2.3, 2.3') are assigned to a bearing (3, 3') by which the first structural unit (1) and the second structural unit (2) are connected together so as to be rotatable about an axis (A), and
in each case
- the first lens (1.2) has been secured to the first bearing ring (1.3, 1.3'), centrally with respect to the axis (A), by a first conical connection (I; I') with the aid of the first clamping sleeve (1.5),
- the second lens (2.2) has been secured to the second body (2.4, 2.4'), centrally with respect to the axis (A), by a second conical connection (II) with the aid of the second clamping sleeve (2.5),
**characterized in that**:
the second body (2.4, 2.4') has been secured to the second bearing ring (2.3, 2.3'), centrally with respect to the axis (A), by a third conical connection (III, III') with the aid of the clamping element (2.6, 2.6'); and
the first structural unit (1) has a sleeve (1.4), which is arranged radially between the first clamping sleeve (1.5) and the first bearing ring (1.3), such that the first conical connection (I) has been established by the first clamping sleeve (1.5) and the sleeve (1.4), or
the first bearing ring (1.3') has a conical surface (1.31'), wherein the first conical connection (I') has been established by the first clamping sleeve (1.5) and the conical surface (1.31') of the first bearing ring (1.3').

2. Device according to one of the preceding claims, wherein the second body (2.4, 2.4') has a first conical surface (2.41, 2.41'), wherein the second conical connection (II) has been established with the aid of the first conical surface (2.41, 2.41') of the second body (2.4, 2.4') and the conical surface (2.51) of the second clamping sleeve (2.5).

3. Device according to one of the preceding claims, wherein the second body (2.4) has a second conical surface (2.44) and the clamping element (2.6) has a conical surface (2.61) such that the third conical connection (III) has been established with the aid of the second conical surface (2.44) of the second body (2.4) and the conical surface (2.61) of the clamping element (2.6).

4. Device according to Claim 3, wherein the second body (2.4) has a thread (2.43) and the clamping element (2.6) likewise has a thread (2.63) that engages in the thread (2.42) of the second body (2.4), wherein the third conical connection (III) has been established by rotating the clamping element (2.6) relative to the second body (2.4).

5. Device according to one of the preceding claims, wherein the first structural unit (1) comprises a first body (1.6) that has a thread (1.63) and the first clamping sleeve (1.5) also has a thread (1.53) that engages in the thread (1.63) of the first body (1.6), wherein the first conical connection (I; I') has been established by rotating the first body (1.6) relative to the first clamping sleeve (1.5).

6. Device according to one of the preceding claims, wherein the second structural unit (2) comprises a fastening element (2.8) that has a thread (2.83) and the second clamping sleeve (2.5) also has a thread (2.53) that engages in the thread (2.83) of the fastening element (2.8), wherein the second conical connection (II) has been established by rotating the fastening element (2.8) relative to the second clamping sleeve (2.5).

7. Device according to Claim 1, wherein the second bearing ring (2.3') has a second conical surface (2.31') and the clamping element (2.6') has a conical surface (2.61').

8. Device according to one of the preceding claims, wherein the clamping element (2.6') is configured as a ring having two internal conical surfaces (2.61').

9. Device according to one of the preceding claims, wherein the bearing (3, 3') is configured as a rolling bearing.

10. Device according to Claim 9, wherein the bearing (3, 3') is configured as two rolling bearings.

11. Device according to Claim 10, wherein the two rolling bearings have been preloaded and positioned in an O arrangement by the first conical connection (I; I') and by the third conical connection (III; III') in terms of a support bearing.

12. Device according to one of the preceding claims, wherein the device is configured such that the first conical connection (I; I') has been established under axial tensile loading of the first clamping sleeve (1.5) and/or the second conical connection (II) has been established under axial tensile loading of the second clamping sleeve (2.5).

13. Device according to one of the preceding claims, wherein the first structural unit (1) comprises a first light guide (1.1) and the second structural unit (2) comprises a second light guide (2.1).

## Revendications

1. Dispositif de transmission de signaux optiques entre deux unités modulaires (1, 2) pouvant tourner l'une par rapport à l'autre,
la première unité modulaire (1) comprenant
- une première lentille (1.2),
- une première bague de palier (1.3, 1.3') et
- une première douille de serrage (1.5) qui possède une surface conique (1.51),
et
la deuxième unité modulaire (2) comprenant
- une deuxième lentille (2.2),
- une deuxième bague de palier (2.3, 2.3'),
- un deuxième corps (2.4, 2.4'),
- une deuxième douille de serrage (2.5) qui possédé une surface conique (2.51) et
- un élément de serrage (2.6, 2.6'),
la première bague de palier (1.3, 1.3') et la deuxième bague de palier (2.3, 2.3') étant affectées à un palier (3, 3') par lequel la première unité modulaire (1) et la deuxième unité modulaire (2) sont reliées l'une à l'autre de manière à pouvoir tourner autour d'un axe (A), et
- la première lentille (1.2) est fixée à l'aide de la première douille de serrage (1.5) à la première bague de palier (1.3, 1.3') par une première liaison conique (I ; I'),
- la deuxième lentille (2.2) est fixée à l'aide de la deuxième douille de serrage (2.5) au deuxième corps (2.4, 2.4') par une deuxième liaison, conique (II), respectivement de manière centrée par rapport à l'axe (A),
**caractérisé en ce que** :
le deuxième corps (2.4, 2.4') est fixé à l'aide de l'élément de serrage (2.6, 2.6') à la deuxième bague de palier (2.3, 2.3') par une troisième liaison conique (TTT, III') de manière centrée par rapport à l'axe (A) ; et
la première unité modulaire (1) comprend une douille (1.4) qui est disposée dans le sens radial entre la première douille de serrage (1.5) et la première bague de palier (1.3), de sorte que la première liaison conique (I) est établie par la première douille de serrage (1.5) et la douille (1.4) ou
la première bague de palier (1.3') possède une surface conique (1.31'), la première liaison conique (I') étant établie par la première douille de serrage (1.5) et la surface conique (1.31') de la première bague de palier (1.3').

2. Dispositif selon l'une des revendications précédentes, le deuxième corps (2.4, 2.4') possédant une première surface conique (2.41, 2.41'), la deuxième liaison conique (II) étant établie à l'aide de la première surface conique (2.41, 2.41') du deuxième corps (2.4, 2.4') et de la surface conique (2.51) de la deuxième douille de serrage (2.5).

3. Dispositif selon l'une des revendications précédentes, le deuxième corps (2.4) possédant une deuxième surface conique (2.44) et l'élément de serrage (2.6) une surface conique (2.61), de sorte que la troisième liaison conique (III) est établie à l'aide de la deuxième surface conique (2.44) du deuxième corps (2.4) et de la surface conique (2.61) de l'élément de serrage (2.6).

4. Dispositif selon la revendication 3, le deuxième corps (2.4) possédant un filet (2.43) et l'élément de serrage (2.6) possédant, également un filet (2.63) qui vient en prise dans le filet (2.42) du deuxième corps (2,4), la troisième liaison conique (III) étant établie par la rotation de l'élément de serrage (2.6) par rapport au deuxième corps (2.4).

5. Dispositif selon l'une des revendications précédentes, la première unité modulaire (1) comprenant un premier corps (1.6) qui possède un filet (1.63) et, en plus, la premiers douille de serrage (1.5) possédant un filet (1.53) qui vient en prise dans le filet (1.63) du premier corps (1.6), a première liaison conique (I ; I") étant établie par la rotation du premier corps (1.6) par rapport à la première douille de serrage (1.5).

6. Dispositif selon l'une des revendications précédentes, la deuxième unité modulaire (2) comprenant un élément de fixation (2.8) qui possède un filet (2.83) et, en plus, la deuxième douille de serrage (2.5) possédant un filet (2.53) qui vient en prise dans le filet (2.8) de l'élément de fixation (2.8), la deuxième liaison conique (II) étant établie par la rotation de l'élément de fixation (2.8) par rapport à la deuxième douille de serrage (2.5).

7. Dispositif selon la revendication 1, la deuxième bague de palier (2.3') possédant une deuxième surface conique (2.3') et l'élément de serrage (2.6') une surface conique (2.61').

8. Dispositif selon l'une des revendications précédentes, l'élément de serrage (2.6') étant réalisé sous la forme d'une bague comprenant deux surfaces coniques (2.61') intérieures.

9. Dispositif selon l'une des revendications précédentes, le palier (3, 3') étant réalisé sous la forme d'un palier à roulement.

10. Dispositif selon la revendication 9, le palier (3, 3') étant réalisé sous la forme de deux paliers à roulement.

11. Dispositif selon la revendication 10, les deux paliers à roulement étant précontraints et mis en contact par la première liaison conique (I ; I') et par la troisième liaison conique (III ; III') dans le sens d'un palier d'appui dans un arrangement torique.

12. Dispositif selon l'une des revendications précédentes, le dispositif étant configuré de telle sorte que la première liaison conique (I ; I') est établie sous contrainte de traction axiale de la première douille de serrage (1.5) et/ou la deuxième liaison conique (II) est établie sous contrainte de traction axiale de la deuxième douille de serrage (2.5).

13. Dispositif selon l'une des revendications précédentes, la première unité modulaire (1) comprenant un premier guide d'ondes optiques (1.1) et la deuxième unité modulaire (2) un deuxième guide fondes optiques (2.1).
